# FASCICULE DE BREVET EUROPEEN

(11) **EP 3 914 543 B1**
(45) Date de publication et mention de la délivrance du brevet: **16.11.2022**
(21) Numéro de dépôt: 20700927.5
(22) Date de dépôt: 22.01.2020
(51) Int. Cl.: B65G 17/18, B65G 47/40, B65G 47/84

(54) **SYSTEME DE TRI DE COLIS A DEBIT ELEVE**
HOCHDURCHSATZPAKETSORTIERSYSTEM
HIGH THROUGHPUT PARCEL SORTING SYSTEM

(30) Priorité: 24.01.2019 FR 1900622
(43) Date de publication de la demande: 01.12.2021
(73) Titulaire: Solystic, 92220 Bagneux (FR)
(72) Inventeur: HOURS, Patrick, 07130 SAINT PERAY (FR); RIEU, Jean, 07800 SAINT GEORGES LES BAINS (FR)
(74) Mandataire: IP Trust
(86) Numéro de dépôt international: PCT/EP2020/051476
(87) Numéro de publication internationale: WO 2020/152204

(56) Documents cités:
- WO-A2-01/51223
- GB-A- 2 101 552
- JP-A- 2002 226 035
- US-A- 4 709 529
- US-A1- 2017 121 127

## Description

### Domaine technique

Le domaine de l'invention est celui des systèmes de tri de colis, et plus particulièrement des Petits Paquets Import, dits "PPI".

Dans le domaine de l'e-commerce international, les PPI sont considérés comme des petites marchandises de faible valeur. Ils sont triés et acheminés en quelques jours ce qui amène à concevoir des centres logistiques de tri à grande échelle capables de trier de l'ordre de un million de paquets par jour sur des dizaines de milliers de destinations différentes.

Actuellement le tri de ces PPI se déroule en plusieurs passes de tri sur un système de tri paquets à convoyeurs, avec entre deux passes de tri, une manutention des paquets mis en conteneurs dans les sorties de tri pour les injecter de nouveau en entrée d'alimentation du système.

Cependant, afin de récupérer le temps perdu lors de la manutention des paquets dans le processus de tri, la vitesse de convoyage des paquets est augmentée.

Or, plus la vitesse de convoyage augmente et plus le risque de chute des paquets est important.

En outre, le nombre important de destinations des paquets nécessite d'augmenter le nombre des sorties de tri des machines ce qui augmente son emprise au sol.

Aussi, lorsque les flux de paquets augmentent, comme lors des périodes de fête, les machines de tri nécessitent une main d'œuvre plus importante ce qui augmente les coûts d'exploitation des centres logistiques.

Enfin, ces machines de tri paquets présentent un taux d'occupation qui est assez bas du fait des temps nécessaires au transbordement des paquets entre l'entrée de la machine et les sorties.

On connaît par ailleurs des systèmes de tri divulgués dans les documents brevets JP2002226035, US2017/121127 et US4709529. Le document brevet JP2002226035 divulgue un système de tri selon le préambule de la revendication 1.

Le but de l'invention est de proposer un système de tri de colis, en particulier des paquets dits "PPI" qui ne présente pas ces inconvénients.

### Résumé de l'invention

A cet effet, l'invention a pour objet un système de tri (1) de colis (2) de type colis ou paquets, comprenant :
- un premier convoyeur (3) de colis apte à convoyer en série les colis suivant une certaine direction de convoyage (D1),
- un second convoyeur (4) de colis de type convoyeur à boucle s'étendant au-dessus d'une pluralité de sorties de tri (5) qui est apte à convoyer en série les colis, ledit second convoyeur étant un convoyeur à plateaux distribués en série et à pas constant,
   caractérisé en ce que lesdits premier et second convoyeurs comprennent chacun une portion de convoyage (PC) contigüe et parallèle par laquelle le premier convoyeur alimente le second convoyeur en colis, lesdits plateaux étant pivotant entre une position inclinée vers le bas dans la direction de convoyage et une position redressée à l'horizontal qui vient à fleur du premier convoyeur,
   en ce que ledit système de tri comprend
- un premier organe mécanique (12) conçu pour coopérer avec les plateaux lorsqu'ils entrent dans ladite portion de convoyage contigüe du second convoyeur afin de les faire pivoter en position redressée à l'horizontal,
- un dispositif d'injection (6) monté sur ladite portion de convoyage du premier convoyeur comprenant des pousseurs à piston (11) aptes à se déplacer selon ladite direction de convoyage en vis-à-vis et de façon synchrone avec les plateaux du second convoyeur et à se déplacer transversalement par rapport à ladite première direction de convoyage de sorte à transférer par translation les objets du premier convoyeur sur les plateaux, et,
- un second organe mécanique (13) conçu pour coopérer avec les plateaux lorsqu'ils quittent ladite portion de convoyage contigüe du second convoyeur afin de les faire pivoter en position inclinée.

Le système de tri selon l'invention peut présenter les particularités suivantes.
- les plateaux en position inclinée s'étendent vers le bas dans le sens contraire de convoyage des colis sur le second convoyeur ;
- chaque plateau comprend un volet amovible entre une position fermée dans laquelle il est conçu pour retenir un objet postal sur le plateau en position inclinée et une position ouverte dans laquelle il est conçu pour libérer l'objet postal du plateau en position inclinée, et en ce qu'il comprend une unité de contrôle-commande apte à commander le déplacement du volet en position ouverte de telle sorte que l'objet sur le plateau chute par gravité dans une sortie de tri appropriée ;
- il comprend un actionneur conçu pour disposer le volet en position ouverte sous la commande de l'unité de contrôle-commande ;
- le volet est monté pivotant sur le plateau de telle sorte que l'ouverture du volet prolonge l'inclinaison du plateau vers le bas.

L'idée à la base de l'invention est de proposer un système de tri apte à convoyer les colis à grande vitesse de manière stable tout en limitant l'emprise au sol du système de tri.

Ainsi, grâce aux portions de convoyage contigües des premier et second convoyeurs et grâce au système d'injection coordonné avec les plateaux, le transbordement des colis du premier convoyeur sur le second convoyeur se fait transversalement à la direction de convoyage, en série et à pas constant.

La présence de volets permet à la fois de diminuer la durée d'injection des colis sur le second convoyeur et d'homogénéiser leur disposition sur les plateaux.

Les plateaux et les volets selon l'invention sont aussi configurés pour caler les colis de façon inclinée durant leur convoyage dans le sens contraire de convoyage.

De plus, grâce à l'inclinaison des plateaux vers le bas dans la direction de convoyage, les sorties de tri peuvent maintenant être alignées sous le second convoyeur afin de permettre un déchargement des colis longitudinalement par rapport au second convoyeur ce qui limite grandement l'emprise au sol.

L'inclinaison vers le bas des plateaux dans le sens contraire au sens de convoyage des colis convoyés sur le second convoyeur permet également de décharger les objets dans le sens contraire de convoyage par glissement sur le plateau, ce qui se traduit par une trajectoire sensiblement verticale de l'objet postal.

On comprendra ainsi que plus la chute sera verticale, est plus la taille de la sortie de tri sera réduite, limitant d'autant l'emprise au sol du système de tri.

### Présentation sommaire des dessins

La présente invention sera mieux comprise et d'autres avantages apparaîtront à la lecture de la description détaillée de modes de réalisation pris à titre d'exemples nullement limitatifs et illustrés par les dessins annexés, dans lesquels :
- la figure 1 illustre de façon très schématique le système de tri selon l'invention ;
- la figure 2 illustre de façon très schématique une portion du second convoyeur selon l'invention au-dessus d'une pluralité de sorties de tri ;
- la figure 3 illustre de façon très schématique le système d'injection selon l'invention et les portions de convoyages contigües des deux convoyeurs ;
- la figure 4 illustre de façon très schématique le premier organe mécanique selon l'invention coopérant avec des plateaux du second convoyeur.

### Description des modes de réalisation

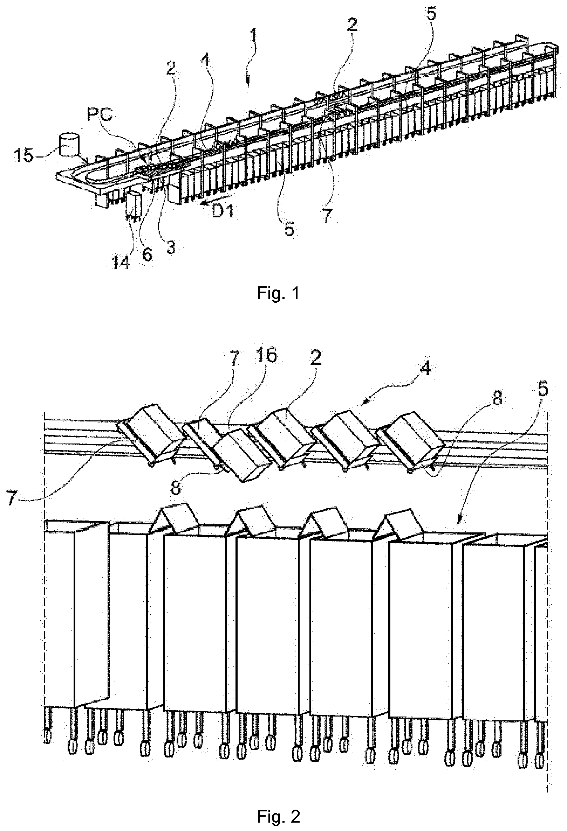

Sur la figure 1, on a représenté de façon très schématique en perspective un système de tri 1 selon l'invention pour le tri de colis 2 comme par exemple des "Petits Paquets Imports" dits PPI.

Ce système de tri 1 est destiné à équiper un centre logistique de traitement des colis.

Elle comprend un premier convoyeur 3 apte à convoyer en série les colis 2 suivant une certaine direction de convoyage D1.

Le système de tri 1 comprend également un second convoyeur 4, ici un convoyeur à plateaux 7, en boucle, apte à convoyer en série les colis 2 au dessus d'une pluralité de sorties de tri 5.

Comme représenté sur la figure 2, le premier convoyeur 3 et le second convoyeur 4 comprennent chacun une portion de convoyage PC contigüe par laquelle le premier convoyeur 3 alimente le second convoyeur 4 en colis à l'aide d'un dispositif d'injection 6.

Les plateaux 7 du second convoyeur 4, visibles sur les figures 2, 3 et 4, sont aptes à porter les colis 2 pour les déplacer en direction de sorties de tri 5, à raison d'un objet par plateau 7.

Les plateaux 7 sont également distribués en série et à pas constant de telle sorte que les objets 2 sont convoyés jusqu'aux sorties de tri 5 en série pour y être déchargés selon un ordre déterminé.

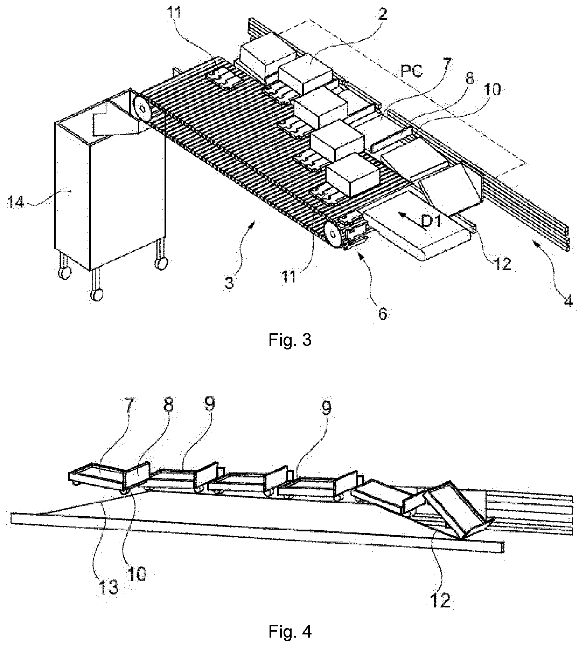

Les plateaux 7 sont pivotants entre une position inclinée vers le bas dans la direction de convoyage D1 qui est adaptée pour le convoyage des objets 2, comme représenté sur la figure 2, et une position redressée, ici à l'horizontal, visible sur les figures 3 et 4, dans laquelle le plateau 7 est à fleur du premier convoyeur 3 pour permettre le transbordement d'un objet 2 par le système d'injection 6 du premier convoyeur 3 sur le second convoyeur 4.

Un volet 8, visible sur les figures 2, 3 et 4, est également prévu le long du côté incliné de chaque plateau 7 afin de retenir l'objet 2 postal chargé sur le plateau 7 lorsqu'il est en position inclinée.

Des butées 9 pourront également être prévues sur d'autres côtés du plateau 7 afin d'éviter les chutes lors de l'injection de l'objet 2 sur le plateau 7.

Le volet 8 est ici amovible, par exemple par l'intermédiaire d'une liaison pivot 10 permettant de prolonger l'inclinaison du plateau 7 vers le bas et favoriser la chute de l'objet 2 dans une sortie de tri 5, comme représenté sur la figure 2.

L'inclinaison vers le bas des plateaux 7 est dirigée ici dans le sens contraire de convoyage des colis 2 de sorte à favoriser une chute des objets 2 dans le sens contraire de déplacement du second convoyeur 4.

Le mouvement de déplacement horizontal de l'objet 2 sur le second convoyeur 4 est ainsi annulé ou tout au moins diminué par le déplacement en sens contraire de l'objet 2 sur le plateau 7, induisant une chute sensiblement verticale.

Grâce à cette configuration, le pas des sorties de tri 5 peut être largement réduit.

Le dispositif d'injection 6 comprend quant à lui des pousseurs à piston 11, visibles sur la figure 3, montés sur la portion de convoyage PC du premier convoyeur 3 contigüe au second convoyeur 4.

Les pousseurs 11 sont aptes à se déplacer selon la direction de convoyage D1 en vis-à-vis et de façon synchrone avec les plateaux 7 du second convoyeur 4 de telle sorte à respecter l'agencement en série et à pas constant des plateaux 7.

Les pousseurs 11 sont également aptes à se déplacer transversalement par rapport à la direction de convoyage D1 de sorte à déplacer par translation les colis 2 déjà en mouvement dans la direction de convoyage D1, sur les plateaux 7 du second convoyeur 4.

Le système de tri 1 comprend également un premier organe mécanique 12 conçu pour redresser les plateaux 7 en position redressée lorsqu'ils entrent dans la portion de convoyage PC du second convoyeur 4 contigüe au premier convoyeur 3, cet organe mécanique 12 est également équipé d'un dispositif de fermeture des volets.

Le premier organe mécanique 12 se présente sous la forme d'une came principale fixée au second convoyeur 4 sous les plateaux 7, comme représentée sur la figure 4, et d'une came secondaire dédiée à la fermeture des volets (non représentée).

Le système de tri 1 comprend aussi un second organe mécanique 13 conçu pour incliner les plateaux 7 en position inclinée lorsqu'ils sortent de la portion de convoyage PC du second convoyeur 4 contigüe au premier convoyeur 3.

Le second organe mécanique 13 se présente également sous la forme d'une came fixée au second convoyeur 4 sous les plateaux 7, comme représentée sur la figure 4, mais inversée par rapport à la came 12 présente en amont du second convoyeur 4.

A l'extrémité aval du premier convoyeur 3 dans la direction de convoyage D1, il est prévu un conteneur 14 de rejet, visible sur les figures 1 et 3, pour recevoir les colis 2 qui ne peuvent pas être transférés sur les plateaux 7 du second convoyeur 4.

Enfin, le système de tri 1 comprend une unité de contrôle-commande 15 indiquée sur la figure 1, qui a en mémoire la liste des colis 2 présents sur le second convoyeur 4 et également leurs adresses de tri postal et qui est agencée pour asservir les pousseurs à pistons 11 au déplacement des plateaux 7 du second convoyeur 4 pour réaliser le transfert à raison d'un objet postal 2 par plateau 7.

L'unité de contrôle-commande 15 est également apte à commander l'ouverture du volet 8 amovible via un actionneur 16, par exemple électromagnétique, pour libérer l'objet du plateau 7 incliné et le faire chuter par gravité dans une sortie de tri 5 appropriée.

Pour réaliser un tri avec le système de tri 1 selon l'invention, des colis 2 sont introduits en série et à pas constant, en amont sur le premier convoyeur 3 pour être convoyés jusqu'à la portion de convoyage PC du premier convoyeur 3 contigüe au second convoyeur 4.

L'unité de contrôle-commande 15 commande alors le déplacement transversal des pousseurs 11 du dispositif d'injection 6 de manière synchrone avec le pas des colis 2 introduits sur le premier convoyeur 3 et le pas des plateaux 7 du second convoyeur 4.

Ainsi, chaque objet 2 déplacé transversalement à la direction de convoyage D1 par un pousseur 11 termine son déplacement sur un plateau 7 dédié qui s'est préalablement positionné en position redressée grâce au premier organe mécanique 12.

L'objet postal 2 chargé sur le plateau 7 est ensuite incliné avec le plateau 7 par l'organe mécanique 13 en sortie de la portion de convoyage PC du second convoyeur 4 contigüe au premier convoyeur 3.

Grâce au volet 8 qui fait office de butée, l'objet postal 2 est convoyé sur le plateau 7 en position inclinée à haute vitesse et peut ainsi prendre des virages sur le second convoyeur 4 sans risque de chute.

L'unité de contrôle-commande 15 va ensuite commander l'ouverture du volet 8 via l'actionneur 16 dès que l'objet postal 2 sera à la verticale de la sortie de tri 5 dans laquelle il doit être trié.

Le plateau 7 déchargé de son objet postal 2 continue ensuite sa course pour terminer la boucle du second convoyeur 4 et entrer en contact avec le premier organe mécanique 12 pour se positionner dans la position redressée à l'horizontal.

Le système de tri 1 selon l'invention peut comporter plusieurs premiers convoyeurs 3 et plusieurs seconds convoyeurs 4 avec plusieurs dispositifs d'injection 6 pour augmenter encore plus les débits de traitement des colis 2.

## Revendications

1. Système de tri (1) de colis (2) de type colis ou paquets, comprenant:
un premier convoyeur (3) de colis apte à convoyer en série les colis suivant une certaine direction de convoyage (D1),
un second convoyeur (4) de colis de type convoyeur à boucle s'étendant au-dessus d'une pluralité de sorties de tri (5) qui est apte à convoyer en série les colis, ledit second convoyeur étant un convoyeur à plateaux distribués en série et à pas constant,
**caractérisé en ce que** lesdits premier et second convoyeurs comprennent chacun une portion de convoyage (PC) contigüe et parallèle par laquelle le premier convoyeur alimente le second convoyeur en colis, lesdits plateaux étant pivotant entre une position inclinée vers le bas dans la direction de convoyage et une position redressée à l'horizontal qui vient à fleur du premier convoyeur,
**en ce que** ledit système de tri comprend
- un premier organe mécanique (12) conçu pour coopérer avec les plateaux lorsqu'ils entrent dans ladite portion de convoyage contigüe du second convoyeur afin de les faire pivoter en position redressée à l'horizontal,
- un dispositif d'injection (6) monté sur ladite portion de convoyage du premier convoyeur comprenant des pousseurs à piston (11) aptes à se déplacer selon ladite direction de convoyage en vis-à-vis et de façon synchrone avec les plateaux du second convoyeur et à se déplacer transversalement par rapport à ladite première direction de convoyage de sorte à transférer par translation les objets du premier convoyeur sur les plateaux, et,
- un second organe mécanique (13) conçu pour coopérer avec les plateaux lorsqu'ils quittent ladite portion de convoyage contigüe du second convoyeur afin de les faire pivoter en position inclinée.

2. Système de tri selon la revendication 1, **caractérisé en ce que** les plateaux en position inclinée s'étendent vers le bas dans le sens contraire de convoyage des colis sur le second convoyeur.

3. Système de tri selon les revendications 1 ou 2, **caractérisé en ce que** chaque plateau comprend un volet (8) amovible entre une position fermée dans laquelle il est conçu pour retenir un objet postal sur le plateau en position inclinée et une position ouverte dans laquelle il est conçu pour libérer l'objet postal du plateau en position inclinée, et **en ce qu'**il comprend une unité de contrôle-commande (15) apte à commander le déplacement du volet en position ouverte de telle sorte que l'objet sur le plateau chute par gravité dans une sortie de tri appropriée.

4. Système de tri selon la revendication 3, **caractérisé en ce qu'**il comprend un actionneur (16) conçu pour disposer le volet en position ouverte sous la commande de l'unité de contrôle-commande.

5. Système de tri selon la revendication 3 ou 4, **caractérisé en ce que** le volet est monté pivotant sur le plateau de telle sorte que l'ouverture du volet prolonge l'inclinaison du plateau vers le bas.

## Patentansprüche

1. Sortiersystem (1) für Pakete (2) einer Paket- oder Päckchenart, umfassend:
einen ersten Förderer (3) für Pakete, der geeignet ist, um die Pakete gemäß einer bestimmten Förderrichtung (D1) seriell zu fördern,
einen zweiten Förderer (4) für Pakete einer Schleifenfördererart, der sich über einer Vielzahl von Sortierausgängen (5) erstreckt, der geeignet ist, um die Pakete seriell zu fördern, wobei der zweite Förderer ein Förderer mit seriell und in konstantem Abstand verteilten Platten ist,
**dadurch gekennzeichnet, dass** der erste und der zweite Förderer jeweils einen angrenzenden und parallelen Förderabschnitt (PC) umfassen, durch den der erste Förderer den zweiten Förderer mit Paketen versorgt, wobei die Platten zwischen einer in der Förderrichtung nach unten geneigten Position und einer horizontal gleichgerichteten Position schwenkbar sind, die mit dem ersten Förderer bündig ist, **dadurch, dass** das Sortiersystem umfasst
- ein erstes mechanisches Element (12), das zum Zusammenwirken mit den Platten ausgelegt ist, wenn sie in den angrenzenden Förderabschnitt des zweiten Förderers eintreten, um sie in die horizontal gleichgerichtete Position zu schwenken,
- eine Einführvorrichtung (6), die auf dem Förderabschnitt des ersten Förderers montiert ist, umfassend Kolbenschieber (11), die geeignet sind, um sich entlang der Förderrichtung gegenüber und auf synchrone Weise mit den Platten des zweiten Förderers zu bewegen und um sich bezogen auf die erste Förderrichtung quer zu bewegen, um die Gegenstände des ersten Förderers auf den Platten durch Verschiebung weiterzugeben, und
- ein zweites mechanisches Element (13), das zum Zusammenwirken mit den Platten ausgelegt ist, wenn sie den angrenzenden Förderabschnitt des zweiten Förderers verlassen, um sie in die geneigte Position zu schwenken.

2. Sortiersystem nach Anspruch 1, **dadurch gekennzeichnet, dass** sich die Platten in der geneigten Position in der entgegengesetzten Förderrichtung der Pakete auf dem zweiten Förderer nach unten erstrecken.

3. Sortiersystem nach Anspruch 1 oder 2, **dadurch gekennzeichnet, dass** jede Platte eine Klappe (8) umfasst, die zwischen einer geschlossenen Position, in der sie zum Halten eines Postgegenstands auf der Platte in der geneigten Position ausgelegt ist, und einer offenen Position lösbar ist, in der sie zum Freigeben des Postgegenstands der Platte in der geneigten Position ausgelegt ist, und **dadurch, dass** es eine Steuerbefehlseinheit (15) umfasst, die geeignet ist, um die Bewegung der Klappe in die offene Position so zu befehlen, dass der Gegenstand auf der Platte durch Schwerkraft in einen passenden Sortierausgang fällt.

4. Sortiersystem nach Anspruch 3, **dadurch gekennzeichnet, dass** es einen Aktuator (16) umfasst, der zum Anordnen der Klappe in der offenen Position unter dem Befehl der Steuerbefehlseinheit ausgelegt ist.

5. Sortiersystem nach Anspruch 3 oder 4, **dadurch gekennzeichnet, dass** die Klappe derart auf der Platte schwenkbar montiert ist, dass das Öffnen der Klappe die Neigung der Platte nach unten weiterführt.

## Claims

1. Sorting system (1) for parcels (2) of the parcel or packet type, comprising:
a first parcel conveyor (3) which is suitable for conveying the parcels in series in a particular conveying direction (D1),
a second parcel conveyor (4) of the loop conveyor type that extends above a plurality of sorting outlets (5) and is suitable for conveying the parcels in series, said second conveyor being a conveyor which has trays distributed in series and has constant pitch,
**characterized in that** said first and second conveyors each comprise a contiguous and parallel conveying portion (PC) by means of which the first conveyor feeds the second conveyor with parcels, said trays being pivotable between a position which is tilted downward in the conveying direction and a position which is straightened to the horizontal and comes flush with the first conveyor,
and **in that** said sorting system comprises
- a first mechanical element (12) which is designed to engage with the trays when they enter said contiguous conveying portion of the second conveyor in order to make said trays pivot to the horizontally straightened position,
- an injection device (6) which is mounted on said conveying portion of the first conveyor and comprises piston pushers (11) which are suitable for being moved in said conveying direction opposite to and synchronously with the trays of the second conveyor and for being moved transversely with respect to said first conveying direction so as to transfer the objects from the first conveyor onto the trays by translation, and
- a second mechanical element (13) which is designed to engage with the trays when they leave said contiguous conveying portion of the second conveyor in order to make said trays pivot in a tilted position.

2. Sorting system according to claim 1, **characterized in that** the trays in a tilted position extend downward in the opposite direction to the conveying direction of the parcels on the second conveyor.

3. Sorting system according to either claim 1 or claim 2, **characterized in that** each tray comprises a flap (8) which is movable between a closed position in which said flap is designed to retain a postal object on the tray in a tilted position and an open position in which said flap is designed to release the postal object from the tray in a tilted position, and **in that** it comprises a control-command unit (15) which is suitable for controlling the movement of the flap into the open position so that the object on the tray falls into a suitable sorting outlet due to gravity.

4. Sorting system according to claim 3, **characterized in that** it comprises an actuator (16) which is designed to put the flap into the open position under the command of the control-command unit.

5. Sorting system according to either claim 3 or claim 4, **characterized in that** the flap is pivotally mounted on the tray in such a way that the opening of the flap prolongs the tilt of the tray downward.
